# EUROPEAN PATENT SPECIFICATION

(11) **EP 3 027 396 B1**
(45) Date of publication and mention of the grant of the patent: **14.06.2023**
(21) Application number: 13798559.4
(22) Date of filing: 31.07.2013
(51) Int. Cl.: B29D 11/00, B29C 67/00, G02B 3/00, G02C 7/02

(54) **ADDITIVE MANUFACTURING PROCESSES FOR TRANSPARENT OPHTHALMIC LENS**
VERFAHREN ZUR ADDITIVEN FERTIGUNG TRANSPARENTER KONTAKTLINSEN
PROCÉDÉ ADDITIF DE FABRICATION DE LENTILLE OPHTALMIQUE TRANSPARENTE

(43) Date of publication of application: 08.06.2016
(60) Divisional application: 23171842.0
(73) Proprietor: Essilor International, 94220 Charenton-le-Pont (FR)
(72) Inventor: JALLOULI, Aref, Shrewsbury, MA 01545 (US); BERZON, Ronald A., Dallas, TX 75248 (US); KEITA, Gabriel, Dallas, TX 75248 (US); HABASSI, Chefik, F-94490 Ormesson (FR)
(74) Representative: Santarelli
(86) International application number: PCT/EP2013/002327
(87) International publication number: WO 2015/014381

(56) References cited:
- WO-A1-2004/008189
- WO-A2-2006/029268
- US-A1- 2006 052 547
- US-B1- 6 844 415

## Description

### TECHNICAL FIELD

The present invention relates to methods of manufacturing three-dimensional transparent ophthalmic elements, such as ophthalmic lenses, using Additive Manufacturing processes and equipment.

### BACKGROUND

Additive Manufacturing methods and devices have become well-known in various industries for production of parts and products formerly manufactured using subtractive manufacturing techniques, such as traditional machining. Application of such manufacturing methods has not been systematically applied.

By additive manufacturing it is meant a manufacturing technology as defined in the international standard ASTM 2792-12, that is to say, a process of joining materials to make objects from 3-D model data, usually layer upon layer, as opposed to subtractive manufacturing methodologies, such as traditional machining.

Additive manufacturing methods may include, but are not limited to, stereolithography (SLA), mask(less) stereolithography or mask(less) projection stereolithography, ink-jet printing such as polymer jetting, scanning laser sintering (SLS), scanning laser melting (SLM), or fused deposition modeling (FDM).

Additive manufacturing technologies comprise processes which create objects by juxtaposition of volume elements according to a pre-determined arrangement that can be defined in a CAD (Computer Aided Design) file. Such juxtaposition is understood as the result of sequential operations such as building a material layer on top of a previously obtained material layer and/or juxtaposing a material volume element or voxel next to a previously obtained volume element or voxel.

It is well known by one of ordinary skill in the art that the determination of the geometry of the voxels and the locations of the voxels is the result of an optimized construction strategy that may take into account the order of the sequential manufacturing operations as related to the capabilities of the chosen additive manufacturing equipment.

The optimized construction strategy typically comprises: the determination of the geometries and locations of voxels; the determination of the geometries and locations of slices made of a plurality of voxels; the determination of the orientation of the global arrangement of voxels and/or slices in the referential of the additive manufacturing equipment(s); and the determination of the order according to which the voxels and/or slices are to be manufactured.

A 3-D printing device that may be used for the invention is adapted to juxtapose voxels to build an optical element. Furthermore, the 3-D printing device may be adapted to lay down successive layers of liquid, powder, or sheet material from a series of cross sections. These layers, which correspond to the virtual cross sections from a digital model, are polymerized, joined together, or fused to create at least part of the optical equipment.

The primary advantage of this technique is the ability to create almost any shape or geometric feature. Advantageously, using such an additive manufacturing method provides much more freedom during the shape-determining step.

Additive manufacturing technologies are a particularly appealing set of techniques to manufacture individualized products with high flexibility and responsiveness. Additive manufacturing technologies are considered in the present invention to produce ophthalmic lenses.

WO2004008189A1 and US2006052547A1 can be cited as examples of a method for an additive manufacturing of the prior art.

Within the terms of reference to the invention, an ophthalmic lens is understood to be transparent when the observation of an image through the ophthalmic lens is perceived with no significant loss of contrast, that is, when the formation of an image through the ophthalmic lens is obtained without adversely affecting the quality of the image seen by the wearer. This definition of the term "transparent" can be applied, within the terms of reference of the invention, to all objects qualified as such in the description.

By nature, and directly linked to the principle of assembling discrete volume elements (voxels), additive manufacturing technologies present difficulties in managing the bulk homogeneity of a final product. This is particularly problematic when one considers manufacturing ophthalmic lenses. Due to the typical size of voxels considered, typically in the range of 0.1 to 500 µm for one dimension of the volume element, ophthalmic lenses resulting from additive manufacturing processes tend to show refractive index variations on a scale which generates scattering (in other terms haze or diffusion) and/or diffraction, in possible combination with optical distortion. It is therefore a key issue for ophthalmic manufacturing processes to reduce or eliminate the visual impact of such a voxel process. In other terms it is required for ophthalmic applications to be able to produce polymer lens bulk with sufficient homogeneity in its final state, in order not to alter the propagation of light rays and hence minimize scattering and/or diffraction phenomena which can induce a detrimental loss of contrast. This requirement of reducing the detrimental optical effect of the "voxel by voxel" construction logic inherent to additive manufacturing technologies also applies if voxels are made of optically absorbent materials, in order to produce, for example, a tinted final lens, for example, for sunwear applications.

In addition, the physical constitution of voxels in additive manufacturing technologies classically uses physical means which induce geometry variations for the voxels along the fabrication process. Those physical means can be light induced polymerization and/or thermal management which typically generate dimensional changes, such as shrinkage, at the scale of individual voxels, and also generate macroscopic stress building at the scale of the object produced by the additive manufacturing process, which in turn, can induce alteration of the desired geometry for the final product.

As far as optical applications are concerned, these above-described dimensional changes during the manufacturing process, either resulting from dimensional changes at the individual voxel scale or from a collective effect linked to voxel assembling, such as stress build up, directly impact the optical characteristics of the final object and its ability to modify an optical wavefront propagation in a controlled and deterministic fashion across the whole transverse section of a beam being transmitted through a lens. For ophthalmic lenses, such dimensional changes alter the final prescription associated with said ophthalmic lenses and which should be individualized to a particular wearer.

The term "prescription" is to be understood to mean a set of optical characteristics of optical power, astigmatism, prismatic deviation, and, where relevant, of addition, determined by an ophthalmologist or optometrist in order to correct the vision defects of the wearer, for example, by means of a lens positioned in front of the wearer's eye. For example, the prescription for a progressive addition lens (PAL) comprises values of optical power and of astigmatism at the distance-vision point and, where appropriate, an addition value. The prescription data may include data for emmetropic eyes.

It is therefore another key issue for ophthalmic applications to be able to produce an object by additive manufacturing with sufficient control of the individual and collective voxel geometries so as to deliver a product whose final geometry is in direct relationship with the geometry initially modelled in a CAD file used by additive manufacturing equipment(s).

To be more specific, in case the geometric alteration of the lens made by additive manufacturing, considered above, is related to polymerization shrinkage at the voxel level, it is particularly desirable to be able to control the shrinkage of a monomer system during polymerization.

Presented herein is a method of manufacturing a three-dimensional ophthalmic lens, and more particularly an ophthalmic lens.

"Ophthalmic lens," according to the invention, is defined as a lens adapted, namely for mounting in eyeglasses, whose function is to protect the eye and/or to correct vision. This lens can be an afocal, unifocal, bifocal, trifocal, or progressive lens. The ophthalmic lens may be corrective or un-corrective. Eyeglasses wherein ophthalmic lenses will be mounted could be either a traditional frame comprising two distinctive ophthalmic lenses, one for the right eye and one for the left eye, or like mask, visor, helmet sight or goggle, wherein one ophthalmic lens faces simultaneously the right and the left eyes. Ophthalmic lenses may be produced with traditional geometry as a circle or may be produced to be fitted to an intended frame.

The present invention presents a method of manufacturing a three-dimensional ophthalmic lens in accordance with the geometry of the frame for which the ophthalmic lens is dedicated. Ophthalmic lenses manufactured in accordance with any of the methods of the invention can furthermore be functionalized, in a further step of optionally post-treating the lens, by adding at least a functional coating and/or a functional film. Functionalities may be added on one face of the ophthalmic lens, or on both faces of the ophthalmic lens, and on each face, the functionalities may be identical or different. The functionality can be, but is not limited to, antiimpact, anti-abrasion, anti-soiling, anti-static, anti-reflective, anti-fog, anti-rain, self-healing, polarization, tint, photochromic, and selective wavelength filter which could be obtained through an absorption filter or reflective filter. Such selective wavelength filters are particularly useful for filtering ultra-violet radiation, blue light radiation, or infra-red radiation, for example. The functionality may be added by at least one process selected from dip-coating, spin-coating, spray-coating, vacuum deposition, transfer processes, or lamination processes. By transfer process it is understood that functionality is firstly constituted on a support like a carrier, and then is transferred from the carrier to the ophthalmic lens through an adhesive layer constituted between the two elements. Lamination is defined as obtaining a permanent contact between a film which comprises at least one functionality as disclosed herein and the surface of the ophthalmic lens to be treated, the permanent contact being obtained by the establishment of a contact between said film and the lens, followed optionally by a polymerization step or a heating step, in order to finalize the adhesion and adherence between the two entities. At the end of this lamination process the assembled film and the optical lens form one single entity. During the lamination process, an adhesive is used to laminate the interface of the film and the ophthalmic lens.

An ophthalmic lens manufactured by a method of the present invention should present the following characteristics: a high transparency with an absence of, or optionally a very low level of light scattering or haze, a high Abbe number of greater than or equal to 30 and preferably of greater than or equal to 35, in order to avoid chromatic aberrations, a low yellowing index and an absence of yellowing over time, a good impact strength (in particular according to the CEN and FDA standards), a good suitability for various treatments (shock-proof primer, anti-reflective or hard coating constitution, and the like) and in particular good suitability for coloring, a glass transition temperature value preferably of greater than or equal to 65° C., and better still of greater than 90° C.

Haze is the percentage of transmitted light that, in passing through a specimen, deviates from the incident beam by forward scattering. Only light flux deviating more than 2.5°, on average, is considered to be haze. In other words, haze is a measure of intensity of the transmitted light that is scattered more than 2.5°. It can appear milky or smoky, when looking through a specimen. Low values are a measurement of low "haze." As haze increases, loss of contrast occurs until the object cannot be seen. Usually an ophthalmic lens could present a haze level less than 1%.

The present invention describes a method to solve the problems described above associated with additive manufacturing techniques to produce a three-dimensional ophthalmic lens. The method includes 1) constituting voxels of one or more compositions, wherein at least one of the compositions comprises one or more pre-polymers or polymers; and 2) inducing connectivity between the voxels, thereby creating one or more incremental elements, repeating the constitution steps, and performing a final post-treatment to ensure the final homogeneity of the resulting ophthalmic lens made of the collection of juxtaposed voxels.

### SUMMARY OF THE INVENTION

The present invention proposes a method of manufacturing a three-dimensional homogeneous transparent ophthalmic lens based on the use of voxels made with one or more compositions that exhibit reduced or no dimensional change, such as shrinkage, between the initial constitution of the voxel and the final state of the ophthalmic lens in an additive manufacturing process. Described herein are one or more embodiments of methods of manufacturing a transparent ophthalmic lens using additive manufacturing constitution processes that, with proper material selection, provide a transparent ophthalmic lens that has, among other things, improved properties.

More particularly, presented herein is a method of manufacturing an ophthalmic lens by constituting a first voxel of a first composition comprising at least one polymer or pre-polymer; constituting a second voxel of a second composition comprising at least a polymer or pre-polymer; inducing connectivity between the constituted first and second voxels, thereby creating an incremental intermediate element; and repeating the steps of constitution and induction of connectivity with successive additional voxels, creating incremental intermediate elements, and thereby forming the three-dimensional, transparent, ophthalmic lens.

The method of manufacturing an ophthalmic lens according to the present invention is defined in claim 1.

More details relating to the various embodiments of the invention will be further described in the detailed description.

### BRIEF DESCRIPTION OF THE DRAWINGS

The advantages, nature, and various additional features of the invention will appear more fully upon consideration of the illustrative embodiments now to be described in detail in connection with accompanying drawings. In the drawings wherein like reference numerals denote similar components throughout the views:

For a more complete understanding of the description provided herein and the advantages thereof, reference is now made to the brief descriptions below, taken in connection with the accompanying drawings and detailed description, wherein like reference numerals represent like parts.

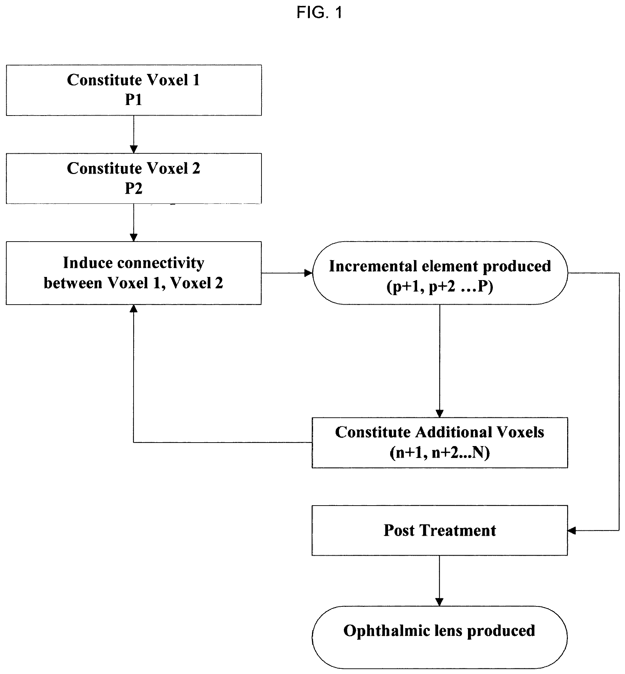

FIG. 1 illustrates a first representative process of manufacturing a three-dimensional ophthalmic lens;

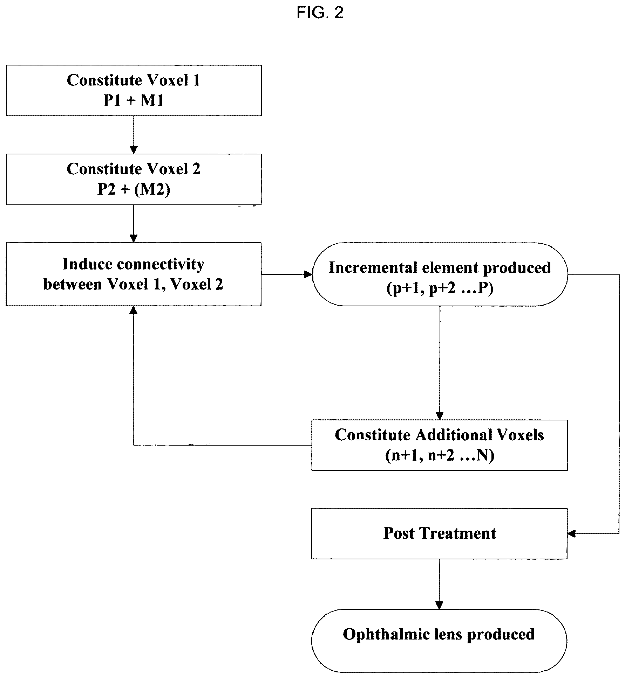

FIG. 2 illustrates a second representative process of manufacturing a three-dimensional ophthalmic lens;

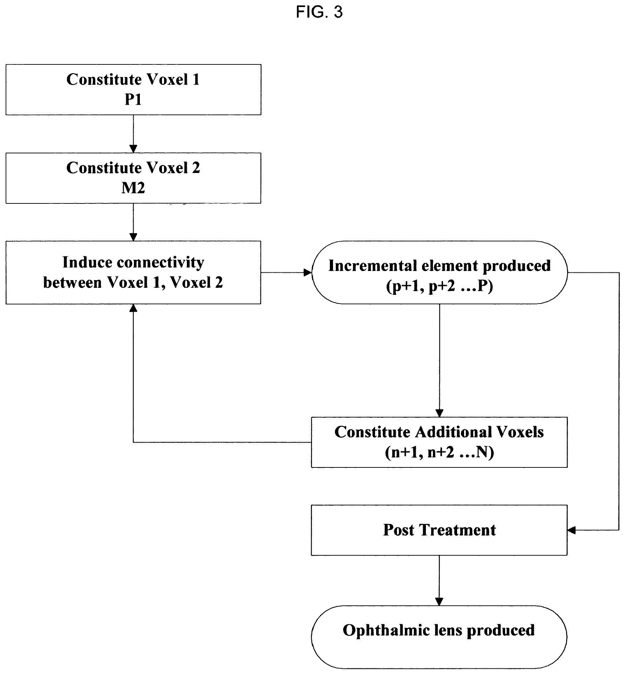

FIG. 3 illustrates a third representative process of manufacturing a three-dimensional ophthalmic lens; and

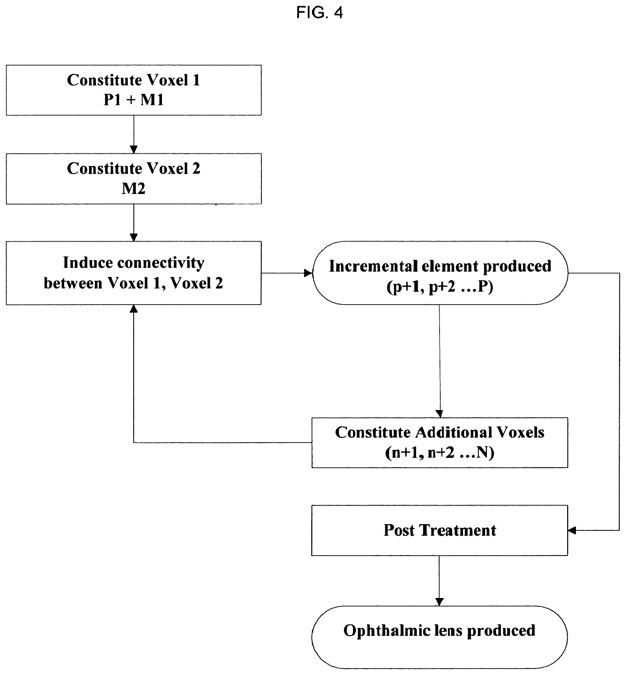

FIG. 4 illustrates a fourth representative process for manufacturing a three-dimensional ophthalmic lens.

### DETAILED DESCRIPTION

The words or terms used herein have their plain, ordinary meaning in the field of this disclosure, except to the extent explicitly and clearly defined in this disclosure or unless the specific context otherwise necessitates a different meaning.

If there is any conflict in the usages of a word or term in this disclosure and one or more patent(s) or other documents mentioned in this specification, the definitions that are consistent with this specification should be adopted.

The words "comprising," "containing," "including," "having," and all grammatical variations thereof are intended to have an open, non-limiting meaning. For example, a composition comprising a component does not exclude it from having additional components, an apparatus comprising a part does not exclude it from having additional parts, and a method having a step does not exclude it having additional steps. When such terms are used, the compositions, apparatuses, and methods that "consist essentially of" or "consist of' the specified components, parts, and steps are specifically included and disclosed. As used herein, the words "consisting essentially of," and all grammatical variations thereof are intended to limit the scope of a claim to the specified materials or steps and those that do not materially affect the basic and novel characteristic(s) of the claimed invention.

The indefinite articles "a" or "an" mean one or more than one of the component, part, or step that the article introduces.

Whenever a numerical range of degree or measurement with a lower limit and an upper limit is disclosed, any number and any range falling within the range is also intended to be specifically disclosed. For example, every range of values (in the form "from a to b," or "from about a to about b," or "from about a to b," "from approximately a to b," and any similar expressions, where "a" and "b" represent numerical values of degree or measurement) is to be understood to set forth every number and range encompassed within the broader range of values, including the values "a" and "b" themselves. Terms such as "first," "second," "third," etc. may be arbitrarily assigned and are merely intended to differentiate between two or more components, parts, or steps that are otherwise similar or corresponding in nature, structure, function, or action. For example, the words "first" and "second" serve no other purpose and are not part of the name or description of the following name or descriptive terms. The mere use of the term "first" does not mean that there any "second" similar or corresponding components, parts, or steps. Similarly, the mere use of the word "second" does not mean that there be any "first" or "third" similar or corresponding component, part, or step. Further, it is to be understood that the mere use of the term "first" does not mean that the element or step be the very first in any sequence, but merely that it is at least one of the elements or steps. Similarly, the mere use of the terms "first" and "second" does not mean any sequence. Accordingly, the mere use of such terms does not exclude intervening elements or steps between the "first" and "second" elements or steps.

As used herein, "Additive Manufacturing" means manufacturing technology as defined in the international standard ASTM 2792-12, describing a process of joining materials to make 3-D solid objects from a 3-D digital model. The process is referred to as "3-D printing" or "materials printing" since successive layers are laid down atop one another. Printing materials include liquids, solids such as powders or sheet materials, from which series of cross-sectional layers are built. The layers, which correspond to the virtual cross sections from the CAD model, are joined or automatically fused to create the solid 3-D object. Additive Manufacturing includes, but is not limited to, manufacturing methods such as stereolithography, mask(less) stereolithography, mask(less) projection stereolithography, ink-jet printing such as polymer jetting, scanning laser sintering (SLS), scanning laser melting (SLM), and fused deposition modelling (FDM). Additive Manufacturing technologies comprise processes which create 3-D solid objects by juxtaposition of volume elements or particles according to a pre-determined arrangement, typically defined in a CAD (Computer Aided Design) file. Juxtaposition is understood as sequential operations including building one material layer on top of a previously built material layer, and/or positioning a material volume element next to a previously constituted material volume element.

As used herein, "voxel" means a volume element. A voxel is a distinguishable, geometric shape which is part of a three-dimensional space. The size of a voxel is typically in the range of 0.1 to 500 µm for one dimension. "Voxel" can refer to an individual element which, in combination with other voxels, can define a line or a layer or other predetermined shape or pattern within the three-dimensional space. Constituted voxels can be any desired shape, depending on the technology and manufacturing process conditions used. A plurality or collection of adjacent voxels, when arranged, can create or define a line or layer and can constitute an optical element. A particular voxel may be identified by x, y, and z coordinates of a selected point of geometry of the shape, such as a corner, center, or by other means known in the art. The boundary of a voxel is defined by the outer surface of the voxel. Such boundaries may be in close proximity to, with or without contacting.

As defined herein, "homogeneity" refers to the absence in a bulk lens material, of any variation of refractive index of the material that could induce noticeable scattering, haze, diffraction, distortion, and/or striation in the visible spectral range. In particular, homogeneity refers to a bulk lens material comprising voxels constituted from the same composition, each voxel showing the same final refractive index.

As used herein, "connectivity," and derivatives of the same, refers to connectivity of at least a portion of a first voxel with at least a portion of a second voxel. The at least a portion of each of the first and second voxels includes one or more species that are capable of forming interactions, such as, but not limited to, chemical bonding, such as ionic, covalent, or metallic, or mechanical bonds, such as molecular entanglements, or any combination thereof. This connectivity can include, but is not limited to, interaction, with or without diffusion, of at least one species from at least a portion of the first voxel with at least a portion of the second voxel, or from at least a portion of the second voxel with at least a portion of the first voxel, or any combination thereof. The species can be at least one molecule, monomer, pre-polymer, polymer chain, or any other species known in the art. The benefits of connectivity between two voxels include the removal of boundaries between voxels, which provides improved optical transparency and thermo-mechanical properties. "Intra-connectivity" should be understood to mean connectivity between at least a portion of a first voxel with at least a portion of the same first voxel. The benefits of intra-connectivity can include improved thermo-mechanical properties due to an increased molecular weight. Connectivity can occur spontaneously or be induced by physical, chemical, or mechanical treatments, or any combination thereof. As used herein, "physical treatment" can include thermal treatment by means such as, but not limited to, exposure to heat, infra-red, microwave, or radiation. Such thermal treatments may increase the temperature which will increase the molecular chain mobility of the monomer, pre-polymer, or polymer or any other species in the voxels and promote connectivity of the voxels. Other examples of physical treatment include plasma or corona discharge to modify the surface. As used herein, "chemical treatment" can be a treatment that uses one or more chemicals which results in a chemical modification of one or more composition. For example, chemical treatments can include exposure to acids, bases, surfactants, halogens, etc. As used herein, "mechanical treatment" can include agitation, such as by exposure to acoustical energy, or an ultra-sonic energy, high-frequency vibratory device which can promote mixing of the voxels at the voxel surface boundaries. Any one of the physical, chemical, and/or mechanical treatments described herein can result in the molecular weight of the pre-polymers and/or polymers present in the voxels being reduced, such as by two-pathway chemistries or reversible reactions, to promote inter-diffusion of the voxels.

As used herein, "induce connectivity" refers to applying any one of a mechanical, physical, or chemical treatment, or any combination thereof, to at least a first voxel and at least a second voxel to cause at least a portion of the at least a first voxel to be intimately contacting at least a portion of the at least a second voxel. Inducing "intra-connectivity" refers to applying any one of a mechanical, physical, or chemical treatment, or any combination thereof, to at least a portion of a first voxel to cause at least a portion of the first voxel to be intimately contacting at least a portion of the same first voxel.

As used herein, a "polymer composition" can include photo-polymerizable and/or thermo-polymerizable compositions. Photo-polymerizable composition means a composition where polymerization occurs by exposure to actinic radiation including, but not limited to, UV, visible, IR, microwave, etc. Thermo-polymerizable composition means a composition where polymerization occurs by exposure to a variation of temperature. By extension, in accordance with the invention, a polymerizable composition could include a thermoplastic or a thermoset polymer.

As used herein, "thermoplastic" polymer is understood to be a thermoplastic resin that can melt when exposed to heat, and preferably is optically clear and of optical grade. Thermoplastics that may be used include, but are not limited to, polyolefinics such as cyclo olefin polymers, polyacrylates such as polymethyl(meth)acrylate, poly(meth)acrylate, polyethyl(meth)acrylate, polybutyl(meth)acrylate, polyisobutyl(meth)acrylate, polyesters, polyamides, polysiloxanes, polyimides, polyurethanes, polythiourethanes, polycarbonates, polyallylics, polysulfides, polyvinyls, polyarylenes, polyoxides, and polysulfones, and blends thereof. At least one of the polymers or pre-polymers described herein can comprise at least one thermoplastic. The thermoplastic can be a solid particle, including powder, beads, and rods.

As used herein, "polymerization/polymerizing," refers to a chemical reaction that produces bonding of one or more monomers and/or pre-polymers to form a polymer.

As used herein, "curing" refers to a chemical process of converting a monomer or pre-polymer having a first molecular weight into a polymer having a second higher molecular weight and/or into a network.

As used herein, "monomer" and/or "pre-polymer" refers to a chemical compound comprising at least one reactive group that is capable of reacting to exposure to activating light, and/or a variation in temperature in the presence of at least one initiator. Such monomers and/or pre-polymers can include at least one reactive group such as, but not limited to, olefinics, acrylics, epoxides, organic acids, carboxylic acids, styrenes, isocyanates, alcohols, norbornenes, thiols, amines, amides, anhydrides, allylics, silicones, vinyl esters, vinyl ethers, vinyl halides, and episulfides. Additional suitable monomers pre-polymers are described herein.

As used herein, "substrate" refers to the surface on which the voxels are deposited in order to build a desired ophthalmic lens. Examples of substrates include platens for SLA.

As used herein, the term "reactive group" means a functional group of a composition that is capable of chemically reacting with a functional group of the same composition or a different composition to form a covalent linkage. The functional groups can be the same or different.

As used herein, "constitutes a voxel" and its derivatives refers to selective deposition of a droplet of a composition to a substrate, through, for example, a print head. In one aspect, a heated nozzle print head can be used to deposit molten polymer wire, thereby constituting a voxel. In this case the additive manufacturing technology is fused deposition modelling (FDM). In another case, the additive manufacturing technology uses polymer jetting to deposit a droplet of a liquid composition, thereby constituting a voxel. "Constitutes a voxel" also refers to selective polymerization of a composition that is capable of generating a voxel. This involves UV exposure, for example, of monomer or pre-polymer, at specific positions of a bath. In this case the additive manufacturing technology used is stereolithography, mask(less) stereolithography, or mask(less) projection stereolithography.

As used herein "activating light" means light having a wavelength that may affect a chemical change.

As used herein, an "initiator" represents a photoinitiator or a thermal initiator.

As used herein, a "photoinitiator" refers to a molecule that generates at least one reactive initiating species (ionic or radical) upon exposure to light, and initiates a chemical reaction or transformation. A photoinitiator may be used alone or in combination with one or more compounds, such as co-initiators. The choice of photoinitiator is based firstly on the nature of reactive group(s) of monomer or pre-polymers used in the composition and also to the kinetics of the polymerization reaction. Photoinitiators can also include free radical initiators. It is well-known that a cationic curable composition cures more slowly than free-radically curable compositions. Some examples of photoinitiators include acetophenones, benzyl and benzoin compounds, benzophenones, cationic initiators, and thixanthones. Additional exemplary photoinitiators and free radical initiators are described herein.

As used herein, a "thermal initiator" represents a species capable of efficiently inducing or causing polymerization or crosslinking by exposure to heat. Thermal initiators can be, but are not limited to, organic peroxides, inorganic peroxides, or azo initiators. Organic peroxides can include, but are not limited to, peroxycarbonates, peroxyesters, dialkylperoxides, diacylperoxide, diperoxyketals, ketoneperoxides and hydroperoxides. Inorganic peroxide thermal initiators can include, but are not limited to ammoniumpersulfate, potassiumpersulfate, and sodiumpersulfate.

As used herein, a "co-initiator" represents a molecule as part of a chemical system which does not absorb light but, nevertheless, participates in the production of the reactive species. A co-initiator is particularly suitable in combination with some free-radical initiator, like benzophenone, which requires a second molecule, such as an amine, to produce a curable radical. Then, under UV radiation, benzophenone reacts with a tertiary amine by hydrogen abstraction, to generate an alpha-amino radical which is well known to initiate the polymerization of (meth)acrylate monomer(s) or pre-polymer(s).

Presented herein are four different approaches for creating an ophthalmic lens using polymers and/or pre-polymers in compositions used during Additive Manufacturing processes. These approaches are addressed below and briefly described in Table 1 as follows:

**Table 1**

| **Approach** | **Voxel 1** | **Voxel 2** |
|---|---|---|
| 1 | P1 | P2 |
| 2 | P1 + M1 | P2 + (M2) |
| 3 | P1 | M2 |
| 4 | P1 + M1 | M2 |

| | | |
|---|---|---|
| P = Polymer, Pre-polymer M=Monomer; (M) = optional monomer | | |

The first technical approach involves 1) constituting a first voxel of a first composition comprising at least one polymer or pre-polymer and 2) constituting a second voxel of a second composition comprising at least one polymer or pre-polymer, 3) inducing connectivity between the first and second voxels to create an intermediate element, and then 4) repeating steps 2) and 3) with additional voxels to create incremental intermediate elements, thereby forming the three-dimensional, transparent, ophthalmic lens. The benefits of this approach include a very low incidence of shrinkage, improved geometric accuracy, desired thermo-mechanical properties and suitable optical clarity.

The second approach involves 1) constituting a first voxel of a first composition comprising at least one polymer or pre-polymer and at least one monomer and 2) constituting a second voxel of a second composition comprising at least one polymer or pre-polymer and optionally at least one monomer, 3) inducing connectivity between the first and second voxels to create an intermediate element, and then repeating steps 2) and 3) with additional voxels to create incremental intermediate elements, thereby forming the three-dimensional, transparent, ophthalmic lens. In this approach, the at least one monomers of the first and second compositions can be identical or different. The benefits of this approach include a low incidence of shrinkage, improved geometric accuracy, reduced composition viscosity, enhanced cross-linking, which can, in turn, increase the Tg (glass transition temperature) and ensure improved thermo-mechanical properties for the final lens product.

The third approach (not claimed) involves 1) constituting a first voxel of a first composition comprising at least one polymer or pre-polymer and 2) constituting a second voxel of a second composition comprising at least one monomer, 3) inducing connectivity between the first and second voxels to create an intermediate element, and then 4) repeating steps 2) and 3) with additional voxels to create incremental intermediate elements, thereby forming the three-dimensional, transparent, ophthalmic lens. The benefits of this approach include the ability to simultaneously use two or more additive manufacturing processes, such as, but not limited to, FDM and ink-jet printing, for example, to produce an ophthalmic lens. Other benefits include the ability to add additives to the monomer phase. The monomer can facilitate the incorporation of other compounds, such as, but not limited, to inorganics, organometallics, metal oxides, nanoparticles, etc. within the liquid phase which could be used to produce to a hybrid ophthalmic lens. A hybrid ophthalmic lens can be defined as an organic lens that contains at least one inorganic material. Yet other benefits include a low incidence of shrinkage, improved geometric accuracy, enhanced cross-linking, which can, in turn, increase the Tg (glass transition temperature) and ensure improved thermo-mechanical properties for the final lens product.

The fourth approach (not claimed) involves 1) constituting a first voxel of a first composition comprising at least one polymer or pre-polymer and at least one monomer and 2) constituting a second voxel of a second composition comprising at least one monomer, 3) inducing connectivity between the first and second voxels to create an intermediate element, and then 4) repeating steps 2) and 3) with additional voxels to create incremental intermediate elements, thereby forming the three-dimensional, transparent, ophthalmic lens. The benefits of this approach include the ability to simultaneously use two or more additive manufacturing processes, such as, but not limited to, FDM and ink-jet printing, for example, to produce an ophthalmic lens. Other benefits include a low incidence of shrinkage, improved geometric accuracy, reduced composition viscosity, enhanced cross-linking, and increased Tg (glass transition temperature) with improved thermo-mechanical properties.

Several benefits are realized from Additive Manufacturing methods utilizing compositions comprising pre-polymeric and/or polymeric precursors. Shrinkage of the desired three-dimensional element during the manufacturing process can be directly related to internal stress. One advantage is that the presence of pre-polymeric and/or polymeric precursors, which act in place of a reactive liquid, reduces internal stresses and decreases shrinkage, providing a more reliable final product.

Another advantage of using compositions comprising pre-polymeric precursors is their ability to be filtered, treated, or purified before use in an additive manufacturing process, thereby optimizing subsequent processing steps. High modulus precursors can be used to improve the thermo-mechanical properties. Also, pre-polymeric and/or polymeric precursors allow for the safe use of otherwise harmful chemicals. For example, pre-polymeric cyanoacrylate or isocyanate can be safely handled and used in standard casting processes.

Additionally, use of polymeric and/or pre-polymeric precursors allows the design of a desired precursor containing one or several reactive groups of the same or different types in a single precursor.

As described above, the present invention comprises three main steps that incorporate a liquid composition to manufacture a 3-D transparent ophthalmic lens, which steps include the following: 1) constituting a first voxel of a first composition and 2) constituting a second voxel of a second composition, wherein the compositions are described in Table 1 above, 3) inducing connectivity between the first and second voxels to create an intermediate element, and then repeating steps 2) and 3) with additional voxels to create incremental intermediate elements, thereby forming the three-dimensional, transparent, ophthalmic lens. Optionally a final step of post-processing treatment can be carried out on the final product, which methods are described herein. An ophthalmic lens created according to any of the methods is also presented herein.

In accordance with the invention, and depending on the chosen additive manufacturing technology, the three steps described above may be achieved voxel-to-voxel, line-to-line, layer-by-layer, and/or after all desired layers or lines have been formed to produce the three-dimensional transparent ophthalmic lens.

In one embodiment the additive manufacturing processes described herein can incorporate the use of pre-polymers or polymers. Generally, a selected pre-polymer or polymer can be mixed, dissolved, or dispersed in a liquid monomer for use, for example, in a 3-D printing process, to create an optical element. One or more pre-polymers and/or polymers can be used as the pre-polymeric material. In one aspect, the first and second compositions can be identical or different. The first and second composition can comprise identical or different polymers and/or pre-polymers.

The selected pre-polymer or polymer can be a solid which is mixed, dissolved, or dispersed in a liquid having one or more monomers. In one aspect, a monomer of a first or second composition can spontaneously connect with one or more other monomers or at least one polymer or pre-polymer of the first or second compositions. In yet another aspect, the monomer can react with a second monomer which can be added after the first monomer and is constituted after the first layer of voxels. Alternatively, in another embodiment, the first or second composition can comprise a monomer which monomer can spontaneously react with itself upon curing.

The composition having the mixed, dissolved, or dispersed pre-polymer(s) or polymers can be constituted as a voxel onto a substrate using an Additive Manufacturing process or device. Preferably a 3-D printer head is used for constitution of the composition, as previously described. Commercial suppliers of Additive Manufacturing devices provide the necessary specifications and guidelines for materials used in their devices. One example of a commercially available 3-D printing device is the ZPrinter^{®} (commercially available from 3DSystems). Flowability of the pre-polymeric or polymeric composition can be achieved by submitting the composition to thermal treatments. Treatments, for example, include thermal radiation, convective heating, conductive heating, cooling, chilling, infra-red, microwave, UV radiation, visible light radiation, evaporation, or exposing the at least one voxel to a temperature which is below the temperature used at the constitution step of at least one of the voxels. A plurality of voxels can be constituted to form a single layer. In one exemplary embodiment the layer can be about 0.127 mm thick or greater. Any of the methods described herein can then be used to connect the adjacent voxels with one another to eliminate, or begin to eliminate, boundaries between voxels.

The polymer or pre-polymer can be in a solvent, a reactive solvent, or monomer. The liquid mixture can be heated to an elevated temperature then constituted as a voxel at a lower temperature. The temperature range can be between about 5° C and about 150° C, more preferably between about 30° C and about 150° C, and most preferably between about 50° C and about 100° C. The lower temperature can cause an increase in the mixture viscosity. The increase in viscosity is sufficient to maintain the voxel geometry and position. The voxels are positioned adjacent one another, such that a monomer can wet the surfaces of the voxels. The process is repeated until a desired number of voxels are constituted proximate one another. In one aspect, the voxels can be positioned adjacent each other. The wetted surfaces of the adjacent voxels inter-diffuse, thereby eliminating the boundaries of the voxels.

Voxel connectivity can be promoted or caused by spontaneous or induced connectivity, such as exposure to radiation (heat, infra-red, microwave, etc.). Connectivity can occur between one or more monomers, pre-polymers, or polymers present in the composition, or between one or more monomers, pre-polymers, or polymers present in the composition and one or more additional monomers, pre-polymers, or polymers added after constitution of the voxels for that purpose. In another exemplary embodiment, in a pre-polymeric or polymeric/monomer mixture, solution, or suspension inside one voxel, connectivity could be induced inside the first voxel between, for example, its pre-polymer or the polymer part of the voxel and a liquid monomer, by submitting them to a mechanical, physical and/or chemical treatment to create an intermediate element having homogeneity prior to constituting the second voxel.

It is anticipated that successful spontaneous connectivity requires the voxel composition be below a specific viscosity at manufacturing conditions to result in sufficient connectivity between juxtaposed voxels for desirable thermo-mechanical and optical properties to be achieved. The connected voxels can then be subjected to various treatments such as, for example, exposure to radiation (e.g., infra-red, micro-wave, UV, visible light, or any combination thereof) to obtain an intermediate element that could be further reacted with a composition of additional voxels by reactions such as crosslinking (cationic, free-radical, condensation-thermal). Curing could also be achieved by annealing, drying, and/or solvent evaporation, for example. Optionally, during the step of constituting a second voxel of a second composition and inducing connectivity of the voxels with successive additional voxels, the method can further comprise subjecting at least one voxel and at least one intermediate element to evaporation or cooling. Further treatments, such as UV or IR radiation, etc. can be performed to evaporate solvent or cure reactive solvent, if desired. The process can be repeated to form an ophthalmic lens of a desired shape.

Connectivity can occur spontaneously or be induced by introduction of an energy source. Connectivity can occur between one or more monomers present in the composition, or between one or more monomers present in the composition and one or more additional monomers added after constitution of the composition for that purpose. The connected voxels can then be subjected to various treatments to cure the layers into a monolithic optical element. Curing can be achieved by exposure to UV, IR, thermal, microwave, or other radiation, and any combination thereof. Curing can also be achieved by cross-linking (cationic, free-radical, condensation-thermal), annealing, drying, and/or solvent evaporation.

In one aspect, more than one pre-polymeric composition can be prepared for alternating use in the Additive Manufacturing process, such that a first pre-polymeric composition (having one or more pre-polymers) and a different, second composition (having one or more pre-polymers) can be sequentially and alternately constituted as first and second compositions of voxels.

In one exemplary embodiment the voxels can be constituted in a predetermined order, a predetermined sequence or pattern of first and second compositions, or pre-programmed time/temperature profiles, and of predetermined compositions. For example, the order of voxel constitution, where two or more compositions, A and B, are being used, can be in any order, such as ABAB..., AABB..., AABAAB..., for example, based on the desired sequence. Further, the voxels can be constituted as groups of voxels of a single composition in a layer. For example, a group of voxels of a first composition A can constitute a first layer, and then a group of voxels of a second composition B can constitute a second layer. This same approach is applicable for methods employing three or more compositions, A, B, C, ...n, where voxels of the different compositions can be constituted in any order.

The voxels (regardless of their composition) can be constituted in rows, whole or partial layers, lines, clusters, or based on manufacturing processes requirements, such as where temperature control results in non-contiguous constitutions. Patterns may also be governed by practical concerns, such as preferred shape of the final optical element.

Materials that can be used as a polymer or pre-polymer that are particularly recommended for optical elements such as ophthalmic lenses are polycarbonates, for example, those made from bisphenol-A polycarbonate, sold for example under the trade names LEXAN^{®} (Sabic Innovation Plastics) or MAKROLON^{®} (Bayer AG), or those obtained by polymerization or copolymerization of diethylene glycol bis(allyl carbonate), sold under the trade name CR-39^{®} (PPG Industries) (ORMA^{®} Essilor lens), acrylics having an index of 1.56 such as ORMUS^{®} (Essilor), thiourethane polymers, and episulfide polymers. Also suitable are synthetic organic polymeric materials such as polyesters, polyamides, polyimides, acrylonitrile-styrene copolymers, styrene-acrylonitrile-butadiene copolymers, polyvinyl chloride, butyrates, polyethylene, polyolefins, epoxy resins and epoxy-fiberglass composites. Other recommended materials include those obtained by polymerization of thio(meth)acrylic monomers, such as those disclosed in FR 2734827. These materials may be obtained by polymerizing mixtures of the monomers described herein. Thus, the voxels described herein can comprise any of these materials that are desirable for the manufacture of optical elements because of their optimum qualities of clarity and transparency. More particularly, any of the polymers or pre-polymers used in the process described herein can comprise one or more of these materials. In some methods, additional components can also be included in the one or more monomer, pre-polymer, or polymer compositions described herein. For example, the pre-monomer, pre-polymer, or polymer composition can include one or more additives, solvents, initiators, catalysts, surfactants, and/or other components, as described herein, depending on the manufacturing process, characteristics of the composition, and mechanical, chemical, and/or physical processes to which it is to be submitted. Additional additives can include, namely, light inhibitors (HALS), diluents, stabilizers, tackifiers, thickeners, thinners, fillers, antiozonants, dyes, UV or IR absorbers, fragrances, deodorants, antioxidants, anti-yellowing agents, binders, plasticizers, photochromic materials, pigments, nucleating agents, thixotropic agents,

Examples of acceptable solvents suitable for compositions described herein comprising monomers and/or pre-polymers or polymers are organic solvents, preferentially polar solvents like methanol, ethanol, propanol, butanol, glycols, and glycol monoethers. These solvents can be used alone or in combination. Solvents suitable for liquid polymerizable compositions comprising polymers like thermoplastic polymers are also organic solvents, preferentially a polar solvent like toluene, benzene, cyclohexene, hexane, tetrahydrofuran, pentane, ketones, such as acetone and methylethyl ketone, and acetates, to name a few.

Examples of acceptable surfactants that can be used according to the disclosed methods can be ionic (cationic, anionic or amphoteric) or non ionic surfactants, preferably non ionic or anionic surfactants. However, a mixture of surfactants belonging to these various categories may be envisaged. Most of these surfactants are commercially available. In one exemplary embodiment, a surfactant can be used which comprises poly(oxyalkylene) groups. Suitable examples of non ionic surfactants for use in the present invention include poly(alkylenoxy)alkyl-ethers, especially poly(ethylenoxy)alkyl-ethers, marketed, for example, by the ICI company under the trade name BRIJ^{®}, poly(alkylenoxy)alkyl-amines, poly(alkylenoxy)alkyl-amides, polyethoxylated, polypropoxylated or polyglycerolated fatty alcohols, polyethoxylated, polypropoxylated or polyglycerolated fatty alpha-diols, polyethoxylated, polypropoxylated or polyglycerolated fatty alkylphenols and polyethoxylated, polypropoxylated or polyglycerolated fatty acids, all having a fatty chain comprising, for example, from 8 to 18 carbon atoms, where the number of ethylene oxide or propylene oxide units may especially range from 2 to 50 and where the number of glycerol moieties may especially range from 2 to 30, ethoxylated acetylene diols, compounds of the block copolymer type comprising at the same time hydrophilic and hydrophobic blocks (for example polyoxyethylene and polyoxypropylene blocks, respectively), copolymers of poly(oxyethylene) and poly(dimethylsiloxane) and surfactants incorporating a sorbitan group.

In other embodiments anionic surfactants can be used, which comprise a sulfonic acid group, amongst which can be alkylsulfosuccinates, alkylethersulfosuccinates, alkylamidesulfosuccinates, alkylsulfosuccinamates, dibasic salts of polyoxyethylene alkyl sulfosuccinic acid, dibasic salts of alkyl sulfosuccinic acid, alkylsulfo-acetates, sulfosuccinic acid hemi-ester salts, alkylsulfates and aryl sulfates such as sodium dodecylbenzene sulfonate and sodium dodecylsulfate, ethoxylated fatty alcohol sulfates, alkylethersulfates, alkylamidoethersulfates, alkylarylpolyethersulfates, alkylsulfonates, alkylphosphates, alkyletherphosphates, alkylamidesulfonates, alkylarylsulfonates, α-olefin-sulfonates, secondary alcohol ethoxysulfates, polyoxyalkylated carboxylic acid ethers, monoglyceride sulfates, sulfuric acid polyoxyethylene alkylether salts, sulfuric acid ester salts, N-acyltaurates such as N-acylmethyltaurine salts, monosulfonic acid hydroxyalkanes salts or alkene monosulfonates, the alkyl or acyl radical of all these compounds comprising preferably from 12 to 20 carbon atoms and the optional oxyalkylene group of these compounds comprising preferably from 2 to 50 monomer units. These anionic surfactants and many others to be suitably used in the present application are described in EP 1418211 and U.S. Pat. No. 5,997,621.

Suitable examples of cationic surfactants for use in the present invention include primary, secondary or tertiary fatty amine salts, optionally polyoxyalkylenated, quaternary ammonium salts such as tetraalkylammonium, alkylamidoalkyltrialkylammonium, trialkylbenzylammonium, trialkylhydroxyalkyl-ammonium or alkylpyridinium chlorides or bromides, imidazoline derivatives or amine oxides of cationic nature.

In one embodiment, the surfactant used can comprise a fluorinated surfactant. In this case, those will be preferably used which comprise at least one fluoroalkyl or polyfluoroalkyl group and more preferably those which comprise at least one perfluoroalkyl group.

In general, a photoinitiator for initiating the polymerization of the lens forming composition preferably exhibits an absorption spectrum over the 200-400 nm, more preferably 300-400 nm range. The following are examples of illustrative photoinitiator compounds within the scope of the invention: methyl benzoylformate, 2-hydroxy-2-methyl-1-phenylpropan-1-one, 1-hydroxycyclohexyl phenyl ketone, 2,2-di-sec-butoxyacetophenone, 2,2-diethoxyacetophenone, 2,2-diethoxy-2-phenyl-acetophenone, 2,2-dimethoxy-2- phenyl-acetophenone, benzoin methyl ether, benzoin isobutyl ether, benzoin, benzil, benzyl disulfide, 2,4-dihydroxybenzophenone, benzylideneacetophenone, benzophenone and acetophenone. Yet other exemplary photoinitiator compounds are 1-hydroxycyclohexyl phenyl ketone (commercially available from Ciba-Geigy as Irgacure^{®} 184), methyl benzoylformate (commercially available from Polysciences, Inc.), or mixtures thereof.

Methyl benzoylformate is one exemplary photoinitiator because it tends to provide a slower rate of polymerization. The slower rate of polymerization tends to prevent excessive heat buildup (and resultant cracking of the lens) during polymerization. In addition, it is relatively easy to mix liquid methyl benzoylformate (which is liquid at ambient temperatures) with many acrylates, diacrylates, and allyl carbonate compounds to form a lens forming composition. The lenses produced with the methyl benzoylformate photoinitiator tend to exhibit more favorable stress patterns and uniformity, as described in U.S. Patent No. 6,022,498.

Yet other examples of suitable photoinitiators include: 1-hydroxycyclohexylphenyl ketone (commercially available from Ciba Additives under the trade name of Irgacure^{®} 184); mixtures of bis(2,6-dimethoxybenzoyl) (2,4,4-trimethyl phenyl)phosphine oxide and 2-hydroxy-2-methyl-1-phenyl-propan-1-one (commercially available from Ciba Additives under the trade name of Irgacure^{®} 1700); mixtures of bis(2,6-dimethoxybenzoyl) (2,4,4 trimethyl phenyl)phosphine oxide and 1-hydroxycyclohexylphenyl ketone (commercially available from Ciba Additives under the trade names of Irgacure^{®} 1800 and Irgacure^{®} 1850); 2,2-dimethoxy-2-phenyl acetophenone (commercially available from Ciba Additives under the trade name of Irgacure^{®} 651); 2-hydroxy-2-methyl-1-phenyl-propan-1-one (commercially available from Ciba Additives under the trade names of Darocur^{®} 1173); mixtures of 2,4,6-trimethylbenzoyl-diphenylphoshine oxide and 2-hydroxy-2-methyl-1-phenyl-propan-1-one (commercially available from Ciba Additives under the trade name of Darocur^{®} 4265); 2,2-diethoxyacetophenone REAP) (commercially available from First Chemical Corporation of Pascagoula, Miss.), benzil dimethyl ketal (commercially available from Sartomer Company under the trade name of KB-1); an alpha hydroxy ketone initiator (commercially available from Sartomer company under the trade name of Esacure^{®} KIP100F); 2-methyl thioxanthone (MTX), 2-chloro-thioxanthone (CTX), thioxanthone (TX), and xanthone, (all commercially available from Aldrich Chemical); 2-isopropyl-thioxanthone (ITX) (commercially available from Aceto Chemical in Flushing, N.Y.); mixtures of triaryl sulfonium hexafluoroantimonate and propylene carbonate (commercially available from Sartomer Company under the trade names of SarCat CD-1010, SarCat 1011, and SarCat KI85); diaryliodinium hexafluoroantimonate (commercially available from Sartomer Company under the trade name of SarCat CD-1012); mixtures of benzophenone and 1-hydroxycyclohexylphenyl ketone (commercially available from Ciba Additives under the trade name of Irgacure^{®} 500); 2-benzyl-2-N,N-dimethylamino-1-(4-morpholinophenyl)-1-butanone (commercially available from Ciba Additives under the trade name of Irgacure^{®} 369); 2-methyl-1-[4-(methylthio)phenyl]-2-morpholino-propan-1-one (commercially available from Ciba Additives under the trade name of Irgacure^{®} 907); bis(η5-2,4-cyclopentadien-1-yl)bis-[2,6-difluoro-3-(1H-pyrrol-1-yl)phenyl]titanium (commercially available from Ciba Additives under the trade name of Irgacure^{®} 784 DC); mixtures of 2,4,6-trimethyl-benzophenone and 4-methyl-benzophenone (commercially available from Sartomer Company under the trade name of Esacure^{®} TZT); and benzoyl peroxide and methyl benzoyl formate (both commercially available from Aldrich Chemical in Milwaukee, Wis.), and as described in U.S. Patent No. 6,786,598 B2.

Examples of free radical initiators suitable for the present invention include, but are not limited to, benzophenone, methyl benzophenone, xanthones, acylphosphine oxide type such as 2,4,6,-trimethylbenzoyldiphenyl phosphine oxide, 2,4,6,-trimethylbenzoylethoxydiphenyl phosphine oxide, bisacylphosphine oxides (BAPO), benzoin and benzoin alkyl ethers like benzoin methyl ether, benzoin isopropyl ether. Free radical photoinitiators can be selected also, for example, from haloalkylated aromatic ketones such as chloromethylbenzophenones; some benzoin ethers such as ethyl benzoin ether and isopropyl benzoin ether; dialkoxyacetophenones such as diethoxyacetophenone and α,,α,-dimethoxy-α-phenylacetophenone; hydroxy ketones such as (1-[4-(2-hydroxyethoxy)-phenyl]-2-hydroxy-2-methyl-1-propan- 1-one) (Irgacure° 2959 from CIBA), 1-hydroxy-cyclohexyl-phenyl-ketone (Irgacure^{®} 184 from CIBA) and 2-hydroxy-2-methyl-1-phenylpropan-1-one (such as Darocur^{®} 1173 sold by CIBA); alpha amino ketones, particularly those containing a benzoyl moiety, otherwise called alpha-amino acetophenones, for example 2-methyl 1-[4-phenyl]-2-morpholinopropan-1-one (Irgacure^{®} 907 from CIBA), (2-benzyl-2-dimethyl amino-1-(4-morpholinophenyl)-butan-1-one (Irgacure^{®} 369 from CIBA); monoacyl and bisacyl phosphine oxides and sulphides, such as phenylbis(2,4,6-trimethylbenzoyl)-phosphine oxide (Irgacure^{®} 819 sold by CIBA); triacyl phosphine oxides; and mixtures thereof.

Cationic photoinitiators suitable for the methods described herein can comprise compounds which are able to form aprotic acids or Bronsteäd acids upon exposure to activating light like UV or visible light. Examples of suitable cationic photoinitiators include, but are not limited to: aryldiazonium salts, diaryliodonium salts, triarylsulfonium salts, or triarylselenium salts.

Additional co-initiators that can be used in any of the methods described herein include acrylyl amine co-initiators (commercially available from Sartomer Company under the trade names of CN-381, CN-383, CN-384, and CN-386), where these co-initiators are monoacrylyl amines, diacrylyl amines, or mixtures thereof. Other co-initiators include ethanolamines. Examples of ethanolamines include, but are not limited to, N-methyldiethanolamine (NMDEA) and triethanolamine (TEA) (both commercially available from Aldrich Chemicals). Aromatic amines (e.g., aniline derivatives) may also be used as co-initiators. Examples of aromatic amines include, but are not limited to, ethyl-4-dimethylaminobenzoate (E-4-DMAB), ethyl-2-dimethylaminobenzoate (E-2-DMAB), n-butoxyethyl-4-dimethylaminobenzoate, p-dimethylaminobenzaldehyde, N, N-dimethyl-p-toluidine, and octyl-p-(dimethylamino)benzoate (commercially available from Aldrich Chemicals or The First Chemical Group of Pascagoula, Miss.), as described in U.S. Patent No. 6,451,226 B1.

Examples of catalysts that may be used with select methods of the invention describe herein include dibutyltin dilaurate, dibutyltin dichloride, butyl chlorotin dihydroxide, butyltin tris (2-ethylhexoate), dibutyltin diacetate, dibutyltin oxide, dimethyltin dichloride, dibutyltin distearate, butyl stannoic acid, dioctyltin dilaurate and dioctyltin maleate, potassium thiocyanate (in the presence of crown ether), sodium thiocyanate (in the presence of crown ether) or lithium thiocyanate (in the presence of crown ether), phosphines, such as triphenylphosphine. Co-catalysts or promoters such as N,N-dimethylcyclohexylamine and 1,4-diazabicyclo-[2,2,2]-octane (DABCO) could also be used with the catalyst to enhance its activity, or any combination thereof.

### EXAMPLES

Several examples are presented herein pertaining to four different embodiments according to the invention.

### Approach 1 Use of a Polymer or Prepolymer 1 + Polymer or Prepolymer 2

### Example 1

In one example, an additive manufacturing process, such as a fused deposition method, which is known in the art, uses a thermoplastic polymer such as, but not limited to, a polycarbonate (PC) material that is extruded as a first constitution of a first composition having at least one voxel onto a substrate. In other embodiments, the polymer or pre-polymer can comprise a thermoplastic polystyrene, polysulfone, or polyamide. A plurality or series of voxels of the first composition can be constituted onto the substrate. In one exemplary embodiment the first composition can be melt-extruded onto the substrate for use with a print-head, as described above. This first composition PC material can be selected from a relatively high molecular weight PC of greater than about Mn> 14,000.

A second constitution of the same polymeric PC composition or a different polymeric composition as the first PC composition is constituted and then applied to the substrate. In one example, a second series of voxels of the second composition can be constituted onto the first series of the voxels. The second series of voxels of the second composition can be heated, as described below. It is desirable that the polymer or pre-polymer of the second constitution be of some other composition where the polymer or pre-polymer has a relatively low molecular weight of Mn< 14,000 and has a lower melting temperature than the first composition of Mn> 14,000. For example, the material can be a liquid or a powder. The at least one polymer or pre-polymer of the second composition has a refractive index in the range of about 0.02 to about 0.001 of the first composition. Connectivity between the at least one voxel and the at least second voxel can then be induced by a treatment. Further, at least one of the voxels and at least one incremental intermediate element can be subjected to at least one mechanical, physical or chemical treatment. For example, in one embodiment, using a heated print head and heated containment/delivery system, the voxel's temperature can be lowered after dispensing to stabilize the voxel and fixes its shape.

In another example, a heat source, such as microwave, UV, infra-red, and the like, can be applied to melt the second composition comprising powder, thereby allowing connection of the voxels from the second melted second composition comprising powder with the voxels of the first constituted PC composition, removal of the voxel boundaries, and to finalize polymerization. During this process, thermoplastic particles are also subject to fusing, sintering, or bonding. Optionally, the particles are then treated, such as with thermal radiation, to fuse with one another. These steps are repeated in order to achieve the final geometric design of the ophthalmic lens. Additional treatments can be performed on at least a portion of the intermediate element or the ophthalmic lens to improve homogenization of the ophthalmic lens. Such treatments can include, but are not limited to, UV radiation, IR radiation, micro-wave radiation, thermal annealing, solvent evaporation, drying, and combinations thereof.

Optionally, a further final treatment can be applied, which treatment can include, but is not limited to, thermal radiation, convective heating, conductive heating, cooling, chilling, infra-red, microwave, UV, visible light, crosslinking, evaporation, or exposing the at least one voxel to a temperature which is below the temperature used at the constitution step of at least one of the voxels of thermal or UV radiation, or annealing.

### Approach 2 Use of a Polymer or Prepolymer 1 + Monomer 1 and Polymer or Prepolymer 2 + Optionally Monomer 2

### Example 2

An isocyanate (NCO) end-capped thiourethane pre-polymer (A), is prepared by reacting a thiol monomer such as MR-7B, (2,3-bis((2-mercaptoethyl)thio)-1-propanethiol) with an isocyanate monomer such as MR-7A (m-xylylene diisocyanate), using a molar excess of isocyanate groups, to produce a first composition (both MR-7A and MR-7B commercially available from Mitsui Chemicals, Inc.). The thiol monomer could be an SH terminated polysulfide.

A thiol (SH) end-capped thiourethane pre-polymer (B), is prepared by reacting a thiol monomer such as MR-7B, (2,3-bis((2-mercaptoethyl)thio)-1-propanethiol), with an isocyanate monomer such as MR-7A (m-xylylene diisocyanate) using a molar excess of thiol groups, to produce a second composition.

Either pre-polymer preparation may contain a metal catalyst such as those known in the arts as dibutyltin dichloride or dibutyltin dilaurate for example, or any of the catalysts disclosed herein. A second catalyst such as a UV activated photoanionic catalyst, such as that described in WO 03/089478 A1, or a thermal activated catalyst such as potassium thiocyanate, such as that described in US Patent NO. 6,844,415, can be added to the pre-polymer to assist during the final cure.

Using additive manufacturing techniques, the first composition of voxel A of prepolymer A (NCO) is constituted onto a substrate. For example, a print head can be used to constitute the first and/or second compositions of voxels. The second composition of Voxel B of pre-polymer B (SH) can be constituted in close proximity to voxel (A).

A treatment may be applied, such thermal or UV radiation, to the first and second voxels to induce connectivity between the voxels. During the process of inducing connectivity, at least a portion of the isocyanate monomer of the first voxel is diffused into the second voxel; and at least a portion of the thiol monomer of the second voxel is diffused into the first voxel.

The constitution steps are repeated until the desired geometry is obtained. Final curing or annealing of the monolithic ophthalmic lens is achieved exposure to UV or heat radiation.

### Approach 3 (Not claimed) Use of a Polymer or Prepolymer 1 and Monomer 2

### Example 3

In this example, a first composition comprising a polymer and a second composition comprising a monomer can be used in an additive manufacturing process to produce an ophthalmic lens. For example, styrene and allyl methacrylate can be polymerized in solution using an organic peroxide (US 4,217,433) to produce a low molecular weight co-polymer with allyl functionality in a first composition. The co-polymer can be isolated and dried. At least a first voxel from the first composition is constituted onto a substrate. A second composition comprising a thiol monomer (such as MR-7B, described above) can be constituted as a second voxel onto the substrate. Heat and/or UV is applied to the constituted voxels, thereby forming an intermediate element. Additional voxels of the composition described herein can be constituted, and this procedure can be repeated until the final ophthalmic element design is achieved. Final curing or annealing of the monolithic optical element is achieved by additional heat or UV radiation, IR radiation, thermal annealing, solvent evaporation, drying, and combinations thereof.

### Approach 4 (Not claimed) Use of a Pre-polymer or Polymer 1 + Monomer 1 and Monomer 2

### Example 4

In yet another example, a first pre-polymeric composition comprising a polymer and a monomer is mixed with a second composition comprising a monomer during an additive manufacturing process. More particularly, the first pre-polymer composition can be prepared by methods known in the art using a molar excess of isocyanate such as 4,4'-methylenebis(cyclohexyl isocyanate)) (Desmodur^{®} W (commercially available from Bayer AG)) with a polycaprolactone diol.

The isocyanate is first mixed with the OH containing polycaprolactone in an equivalent ratio of about 3.0 NCO/1.0 OH and then reacted. The isocyanate and polycaprolactone diol (having a molecular weight of about 400 to about 1,000) (commercially available from Perstorp) reactants can be heated to 135° C. to 143 C. under dry nitrogen, held at that temperature for 3 to 5 minutes, and allowed to react to form a pre-polymer. The pre-polymer is cooled to 104° to 121° C., and optionally, a UV stabilizer, anti-oxidant, color blocker, and/or optical brightener can be added. The pre-polymer is further cooled to 77° to 93° F. and then evacuated and stored for 24 hours at 71° C.

The first and the second compositions can be constituted using, for example, a prepolymer composition using a print-head, as described above. In one example, the second composition can be constituted proximate the first voxel of the first composition. After constitution of voxels of this first composition onto the substrate, void spaces are intentionally left between the voxels. To fill in the void spaces between the voxels, the second composition of the at least one monomer comprises voxels of at least one aromatic amine, such as diethyltoluenediamine or Ethacure^{®} 100-LC, and can be positioned or deposited into the void spaces between the first constituted voxels of the first pre-polymer composition to create an intermediate element. The amine is used in a ratio of 0.92 to 0.96 NH2/1.0 NCO. Ethacure^{®} 100-LC, a low-color curing agent, is used in applications requiring optical clarity. Ethacure^{®} 100-LC is commercially available from Albemarle) (U.S. Patent Nos. 5,962,617, 6,127,505, and 7,767,779).

Additional voxels of the composition described herein can be constituted, and this procedure can be repeated until the final ophthalmic element design is achieved. Final curing or annealing of the monolithic ophthalmic lens is achieved by additional heat curing methods. In one example, a controlled amount of thermal energy to cure, to a desired amount, the constituted voxels. The polymer can be finally cured at 110-135° C for 4-24 hours.

Additional examples of acceptable monomers or pre-polymers that can be used according to the disclosed methods of the invention described above can include epoxy or thioepoxy monomers, which are classified as either aromatic (such as bisphenol A and F epoxies) or aliphatic. Aliphatic epoxies are lower in viscosity. Aliphatic epoxies can be both completely saturated hydrocarbons (alkanes) or can contain double or triple bonds (alkenes or alkynes). They can also contain rings that are not aromatic. Epoxies may be also monofunctional or polyfunctional, and such epoxies may be from the family of alkoxysilane epoxy.

Non-alkoxysilane polyfunctional epoxy monomers may be selected from the group consisting of diglycerol tetraglycidyl ether, dipentaerythritol tetraglycidyl ether, sorbitol polyglycidyl ether, polyglycerol polyglycidyl ether, pentaerythritol polyglycidyl ether such as pentaerythritol tetraglycidyl ethertrimethylolethane triglycidyl ether, trimethylolmethane triglycidyl ether, trimethylolpropane triglycidyl ether, triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, Castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether, (3,4-Epoxycyclohexane) methyl 3,4-epoxycylohexylcarboxylate and mixtures thereof.

The monoepoxysilanes are commercially available and include, for example, beta-(3,4-epoxycyclohexyl)-ethyltrimethoxysilane, (gamma-glycidoxypropyltrimethoxysilane), (3-glycidoxypropyl)-methyl-diethoxysilane, and gamma-glycidoxy-propylmethyldimethoxysilane. These commercially available monoepoxysilanes are listed solely as examples, and are not meant to limit the broad scope of this invention. Specific examples of the alkyltrialkoxysilane or tetraalkoxysilane suitable for the present invention include methyltrimethoxysilane, ethyltrimethoxysilane, phenyltrimethoxysilane, phenyltrimethoxysilane, methyltriethoxysilane, ethyltriethoxysilane.

Other monomers that can be used include meth(acrylates), which can be monofunctional, difunctional, trifunctional, tetrafunctional, pentafunctional, and even hexafunctional. Typically, the higher the functionality, the greater is the crosslink density. Methacrylates have slower curing than the acrylates. The two, three, four or six (meth)acrylic functional groups are selected from the group consisting of pentaerythritol triacrylate, pentaerythritol tetraacrylate, tetraethyleneglycol diacrylate, diethyleneglycol diacrylate, triethyleneglycol diacrylate, 1,6-hexanediol di(meth)acrylate, tripropylene glycol diacrylate, dipropyleneglycol diacrylate, ethyleneglycol dimethacrylate, trimethylolethane triacrylate, trimethylolmethane triacrylate, trimethylolpropane triacrylate, trimethylolpropane trimethacrylate, 1,2,4-butanetriol trimethacrylate, tris(2-hydroxyethyl) isocyanurate triacrylate, ditrimetholpropane tetraacrylate, ethoxylated pentaerythritol tetraacrylate, triphenylolmethane triacrylate, trisphenol triacrylate, tetraphenylol ethane triacrylate, 1,2,6-hexanetriol triacrylate, glycerol triacrylate, diglycerol triacrylate, glycerol ethoxylate triacrylate, ethylene glycol diacrylate, 1,4-butanediol diacrylate, 1,4 butanediol dimethacrylate, neopentyl glycol diacrylate, cyclohexanedimethanol diacrylate, dipropylene glycol diacrylate, polypropylene glycol diacrylate dipentaerythritol hexaacrylate, polyester hexaacrylate, sorbitol hexaacrylate, and fatty acidmodified polyester hexaacrylate, and is most preferably dipentaerythritol hexaacrylate.

Other monomers or pre-polymers may be chosen, such as those disclosed in U.S. Patent Application No. 2002/0107350, such as, but not limited to, the monomer corresponding to the formula below.

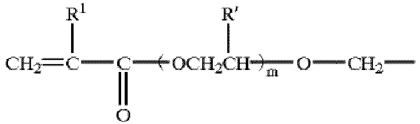

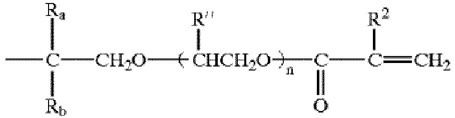

In which R1, R2, R' and R" represent, independently of one another, a hydrogen atom or a methyl radical, Ra and Rb, which are identical or different, each represent an alkyl group having 1 to 10 carbon atoms, and m and n are integers wherein m+n is comprised between 2 to 20 inclusive.

Other monomers that may be used include, but are not limited to, 2,2-di(C2-C10)alkyl-1,3-propanediol 2x-propoxylate di(meth)acrylate and 2,2-di(C2-C10)alkyl-1,3-propanediol 2x-ethoxylate di(meth)acrylate, like for example 2-ethyl-2-n-butyl-1,3-propanediol 2x-propoxylate dimethacrylate. (Meth)acrylic monomers, as described above, and their process of preparation, are disclosed in the document WO-95/11219. This type of monomer can be polymerized by photopolymerization techniques or mixed photopolymerization and thermal polymerization techniques. The polymerizable composition comprising this (meth)acrylic monomer can comprise other monomer(s) polymerizable by a radical route, and presenting one or more (meth)acrylate functional groups and/or one or more allyl groups. Mention may be made, among these monomers, of poly(methylene glycol) mono- and di(meth)acrylates, poly(ethylene glycol) mono- and di(meth)acrylates, poly(propylene glycol) mono- and di(meth)acrylates, alkoxypoly(methylene glycol) mono-and di(meth)acrylates [sic], alkoxypoly(ethylene glycol) mono- and di(meth)acrylates [sic] and poly(ethylene glycol)-poly(propylene glycol) mono- and di(meth)acrylates. These monomers are disclosed, inter alia, in U.S. Patent No. 5,583,191.

Another class of monomers that could be used in combination with the (meth)acrylic monomer comprises allyl monomers, such as poly(alkylene glycol) di(allyl carbonate) [sic], and monomers comprising a (meth)acrylate functional group and an allyl group, in particular a methacrylate functional group and an allyl group. Mention may be made, among the poly(alkylene glycol) di(allyl carbonate) [sic] suitable for the present invention, of ethylene glycol di(2-chloroallyl carbonate), di(ethylene glycol) di(allyl carbonate), tri(ethylene glycol) di(allyl carbonate), propylene glycol di(2-ethylallyl carbonate), di(propylene glycol) di(allyl carbonate), tri(methylene glycol) di(2-ethylallyl carbonate) and penta(methylene glycol) di(allyl carbonate). A well known monomer is di(allyl carbonate) is di(ethylene glycol) di(allyl carbonate), sold under the trade name CR-39 Allyl Diglycol Carbonate (commercially available from PPG Industries Inc.).

Other monomers may be used such as those comprising a (meth)acrylate functional group and an allyl group, of tri(propylene glycol) di(meth)acrylate, poly(ethylene glycol) dimethacrylate [sic] (for example, poly(ethylene glycol-600) dimethacrylate, poly(propylene glycol) dimethacrylate [sic] (for example, polypropylene glycol-400) dimethacrylate), bisphenol A alkoxylate dimethacrylate [sic], in particular bisphenol A ethoxylate and propoxylate dimethacrylate [sic] (for example, bisphenol A 5-ethoxylate dimethacrylate, bisphenol A 4,8-ethoxylate dimethacrylate and bisphenol A 30-ethoxylate dimethacrylate).

Other monofunctional monomers may be used as well, such as, but not limited to, aromatic mono(meth)acrylate pre-polymers, and, among the trifunctional monomers, tri(2-hydroxyethyl)iso- cyanurate triacrylate, trimethylolpropane ethoxylate acrylate [sic] and trimethylolpropane propoxylate acrylate [sic].

The polymerizable compositions according to the invention and comprising such (meth)acrylic monomers or pre-polymers, also comprise a system for initiating the polymerization. The polymerization initiating system can comprise one or more thermal or photochemical polymerization initiating agents or alternatively, preferably, a mixture of thermal and photochemical polymerization initiating agents. Mention may be made, among the thermal polymerization initiating agents which can be used in the present invention, of peroxides, such as benzoyl peroxide, cyclohexyl peroxydicarbonate and isopropyl peroxydicarbonate. Mention may be made, among the photoinitiators, of in particular 2,4,6-trimethylbenzoyldiphenylphosphine oxide, 1-hydroxycyclohexyl phenyl ketone, 2,2-dimethoxy-1,2-diphenylethane-1-one [sic] and alkyl benzoyl ethers. Generally, the initiating agents are used in a proportion of 0.01 to 5% by weight with respect to the total weight of the polymerizable monomers present in the composition. As indicated above, the composition more preferably simultaneously comprises a thermal polymerization initiating agent and a photoinitiator.

Other monomers or pre-polymers that may be used in the present invention include thio(meth)acrylate, can notably be functional monomers of mono(thio)(meth)acrylate or mono-and di(meth)acrylate type bearing a 5- to 8-membered heterocycle consisting of hydrogen, carbon and sulphur atoms and having at least two endocyclic sulphur atoms. Preferably, the heterocycle is 6- or 7-membered, better still 6-membered. Also preferably, the number of endocyclic sulphur atoms is 2 or 3. The heterocycle can optionally be fused with a substituted or unsubstituted C5 - C8 aromatic or polycyclanic ring, preferably a C6 -C7 ring. When the heterocycle of the functional monomers contains 2 endocyclic sulphur atoms, these endocyclic sulphur atoms are preferably in positions 1-3 or 1-4 of the heterocycle. According to the invention, the monomer is preferably also a thio(meth)acrylate monomer. Lastly, the monomers according to the invention preferably have molar masses of between 150 and 400, preferably 150 and 350 and better still between 200 and 300. Examples of such monomers are described in US Patent No. 6,307,062.

Advantageously the pre-polymeric or polymeric composition can comprising such thio(meth)acrylate monomers may comprise a co-monomer. Among the co-monomers which can be used with the monomers of (thio)(meth)acrylate type for the polymerizable compositions according to the invention, mention may be made of mono- or polyfunctional vinyl, acrylic and methacrylic monomers.

Among the vinyl co-monomers which are useful in the compositions of the present invention, mention may be made of vinyl alcohols and vinyl esters such as vinyl acetate and vinyl butyrate. The acrylic and methacrylic co-monomers can be mono- or polyfunctional alkyl (meth)acrylate co-monomers and polycyclenic or aromatic mono(meth)acrylate co-monomers.

Among the alkyl (meth)acrylates, mention may be made of styrene, α-alkylstyrenes such as α -methyl styrene, methyl (meth)acrylate, ethyl (meth)acrylate, butyl (meth)acrylate, isobutyl (meth)acrylate or difunctional derivatives such as butanediol dimethacrylate, or trifunctional derivatives such as trimethylolpropane trimethacrylate.

Among the polycyclenic mono(meth)acrylate co-monomers, mention may be made of cyclohexyl (meth)acrylate, methylcyclohexyl (meth)acrylate, isobomyl (meth)acrylate and adamantyl (meth)acrylate.

Co-monomers which may also be mentioned are aromatic mono(meth)acrylates such as phenyl (meth)acrylate, benzyl (meth)acrylate, 1-naphthyl (meth)acrylate, fluorophenyl (meth)acrylate, chlorophenyl (meth)acrylate, bromophenyl (meth)acrylate, tribromophenyl (meth)acrylate, methoxyphenyl (meth)acrylate, cyanophenyl (meth)acrylate, biphenyl (meth)acrylate, bromobenzyl (meth)acrylate, tribromobenzyl (meth) acrylate, bromobenzylethoxy(meth)acrylate, tribromobenzylethoxy(meth)acrylate and phenoxyethyl (meth)acrylate.

Among the co-monomers which can be used in the compositions according to the invention, mention may also be made of allylcarbonates of linear or branched, aliphatic or aromatic, liquid polyols such as aliphatic glycol bis(allylcarbonates) or alkylenebis(allylcarbonates). Among the polyol(allylcarbonates) which can be used to prepare the transparent polymers which can be used in accordance with the invention, mention may be made of ethylene glycol bis(allylcarbonate), diethylene glycol bis (2-methallylcarbonate), diethylene glycol bis(allylcarbonate), ethylene glycol bis(2-chloroallylcarbonate), triethylene glycol bis(allylcarbonate), 1,3-propanediol bis(allylcarbonate), propylene glycol bis(2-ethylallylcarbonate), 1,3-butanediol bis(allylcarbonate), 1,4-butanediol bis(2-bromoallylcarbonate), dipropylene glycol bis(allylcarbonate), trimethylene glycol bis(2-ethylallylcarbonate), pentamethylene glycol bis(allylcarbonate) and isopropylene bisphenol bis(allylcarbonate).

The polymerization process which is particularly suitable in the present invention is photochemical polymerization. A recommended polymerization process is photochemical polymerization via ultraviolet radiation and preferably UV-A radiation. Thus, the polymerizable composition may also contain polymerization initiators, preferably photoinitiators, in proportions of from 0.001 to 5% by weight relative to the total weight of the composition, and even more preferably from 0.01 to 1%. The photoinitiators which can be used in the polymerizable compositions according to the invention are, in particular, 2,4,6-trimethylbenzoyldiphenylphosphine oxide, 1-hydroxycyclohexyl phenyl ketone, 2,2-dimethoxy-1,2-diphenyl-1-ethanone and alkylbenzoin ethers.

Also presented herein are monomers or pre-polymers comprising vinyl ether groups as a reactive group. Examples of such compound comprising this functionality are ethyl vinyl ether, propyl vinyl ether, isobutyl vinyl ether, cyclohexyl vinyl ether, 2-ethyl hexyl vinyl ether, butyl vinyl ether, ethylenglycol monovinyl ether, diethyleneglycol divinyl ether, butane diol divinyl ether, hexane diol divinyl ether, cyclohexane dimethanol monovinyl ether

Additionally, other possible monomers include a wide variety of compounds that may be used as the polyethylenic functional monomers containing two or three ethylenically unsaturated groups. One exemplary polyethylenic functional compounds containing two or three ethylenically unsaturated groups may be generally described as the acrylic acid esters and the methacrylic acid esters of aliphatic polyhydric alcohols, such as, for example, the di- and triacrylates and the di- and trimethacrylates of ethylene glycol, triethylene glycol, tetraethylene glycol, tetramethylene glycol, glycerol, diethyleneglycol, buyleneglycol, proyleneglycol, pentanediol, hexanediol, trimethylolpropane, and tripropyleneglycol. Examples of specific suitable polyethylenic-functional monomers containing two or three ethylenically unsaturated groups include trimethylolpropanetriacrylate (TMPTA), tetraethylene glycol diacrylate (TTEGDA), tripropylene glycol diacrylate (TRPGDA), 1,6 hexanedioldimethacryalte (HDDMA), and hexanedioldiacrylate (HDDA).

Other examples of monomers include aromatic-containing bis(allyl carbonate)-functional monomers including bis(allyl carbonates) of dihydroxy aromatic-containing material. The dihydroxy aromatic-containing material from which the monomer is derived may be one or more dihydroxy aromatic-containing compounds. Preferably the hydroxyl groups are attached directly to nuclear aromatic carbon atoms of the dihydroxy aromatic-containing compounds. Preferably the hydroxyl groups are attached directly to nuclear aromatic carbon atoms of the dihydroxy aromatic-containing compounds. The monomers are themselves known and may be prepared by procedures well known in the art.

Among the exemplary polyisocyanate or isothiocyanate monomers there may be cited tolylene diisocyanate or diisothiocyanate, phenylene diisocyanate or diisothiocyanate, ethylphenylene diisoocyanate, isopropyl phenylene diisocyanate or diisothiocyanate, dimethylphenylene diisocyanate or diisothiocyanate, diethylphenylene diisocyanate or diisothiocyanate, diethylphenylene diisocyanate or diisothiocyanate, diisopropylphenylene diisocyanate or diisothiocyanate, trimethylbenzyl triisocyanate or triisothiocyanate, xylylene diisocyanate or diisothiocyanate, benzyl triiso(thio)cyanate, 4,4'-diphenyl methane diisocyanate or diisothiocyanate, naphthalene diisocyanate or diisothiocyanate, isophorone diisocyanate or diisothiocyanate, bis(isocyanate or diisothiocyanate methyl) cyclohexane, hexamethylene diisocyanate or diisothiocyanate and dicyclohexylmethane diisocyanate or diisothiocyanate.

Among the exemplary polythiol monomers there may be cited aliphatic polythiols such as pentaerythritol tetrakis mercaptoproprionate, 1-(1'mercaptoethylthio)-2,3-dimercaptopropane, 1-(2'-mercaptopropylthio)-2,3-dimercaptopropane, 1-(-3'mercaptopropylthio)-2,3 dimercaptropropane, 1-(-4'mercaptobutylthio)-2,3 dimercaptopropane, 1-(5'mercaptopentylthio)-2,3 dimercapto-propane, 1-(6'-mercaptohexylthio)-2,3-dimercaptopropane, 1,2-bis(-4'-mercaptobutylthio)-3-mercaptopropane, 1,2-bis(-5'mercaptopentylthio)-3-mercaptopropane, 2,3-bis(-5'mercaptopentylthio)-3-mercaptopropane, 1,2-bis(6'-mercaptohexyl)-3-mercaptopropane, 1,2,3-tris(mercaptomethylthio)propane, 1,2,3-tris(-3'-mercaptopropylthio)propane, 1,2,3-tris(-2'-mercaptoethylthio)propane, 1,2,3-tris(-4'-mercaptobutylthio) propane, 1,2,3-tris('6'-mercaptohexylthio)propane, methanedithiol), 1,2-ethanedithiol, 1,1-propanedithiol, 1,2-propanedithiol, 1,3-propanedithiol, 2,2-propanedithiol, 1,6-hexanethiol-1,2,3-propanetrithiol, and 1,2-bis(-2'-mercaptoethylthio)-3-mercaptopropane.

### Conclusion

The particular embodiments disclosed above are illustrative only, as the present invention may be modified and practiced in different but equivalent manners apparent to those skilled in the art having the benefit of the teachings herein. It is, therefore, evident that the particular illustrative embodiments disclosed above may be altered or modified and all such variations are considered within the scope of the present invention, provided that the variations lie within the scope of the appended claims. The various elements or steps according to the disclosed elements or steps can be combined advantageously or practiced together in various combinations or sub-combinations of elements or sequences of steps to increase the efficiency and benefits that can be obtained from the invention.

It will be appreciated that one or more of the above embodiments may be combined with one or more of the other embodiments, unless explicitly stated otherwise. Furthermore, no limitations are intended to the details of construction, composition, design, or steps herein shown, other than as described in the claims.

## Claims

1. A method for Additive Manufacturing of a three-dimensional, transparent, ophthalmic lens, the method comprising the following steps:
/1/ constituting a first voxel of a first composition comprising at least one polymer or prepolymer;
/2/ constituting a second voxel of a second composition comprising at least a polymer or pre-polymer;
/3/ inducing connectivity between the constituted first and second voxels, thereby creating an incremental intermediate element (p);
/4/ repeating steps /2/ and /3/ with successive additional voxels (n+1, n+2, ...N), creating incremental intermediate elements (p+1, p+2, ...P), thereby forming the three-dimensional, transparent, ophthalmic lens;
wherein the at least one polymer or pre-polymer of the second composition has a refractive index in the range of about 0,02 to about 0,001 of the first composition;
wherein at least one of the polymers or pre-polymers comprises at least one thermoplastic; and
wherein the method further comprises during step /3/, melting, fusing, sintering, or bonding particles of the at least one thermoplastic.

2. The method of claim 1, wherein the first and second compositions are different.

3. The method of claim 2, wherein the first and second compositions comprise different polymers or pre-polymers.

4. The method of claim 2, wherein the first and second compositions comprise identical polymers or pre-polymers.

5. The method of claims 1-4, wherein the at least one polymer is selected from the group consisting of: polyacrylics, polyols, polyamines, polyamides, polyanhydrides, polycarboxilic acids, polyepoxides, polyisocyanates, polynorbornenes, polysiloxanes, polysilazanes, polystyrenes, polyolefinics, polyesters, polyimides, polyurethanes, polythiourethanes, polycarbonates, polyallylics, polysulfides, polyvinylesters, polyvinylethers, polyarylenes, polyoxides, polysulfones, poly cyclo olefins, polyacrylonitriles, polyethylene terephthalates, polyetherimides, and polypentenes.

6. The method of claims 1-5, wherein the pre-polymer is selected from the group consisting of: polyacrylics, polyols, polyamines, polyamides, polyanhydrides, polycarboxilic acids, polyepoxides, polyisocyanates, polynorbornenes, polysiloxanes, polysilazanes, polystyrenes, polyolefinics, polyesters, polyimides, polyurethanes, polythiourethanes, polycarbonates, polyallylics, polysulfides, polyvinylesters, polyvinylethers, polyarylenes, polyoxides, and polysulfones, poly cyclo olefins, polyacrylonitriles, polyethylene terephthalates, polyetherimides, polypentenes.

7. The method of claim 1, wherein the at least one thermoplastic is a solid particle, including powder, beads, and rods.

8. The method of claims 1-7, wherein the at least one thermoplastic is selected from the group consisting of: polyolefinics such as cyclo olefin polymers, polyacrylates such as polymethyl(meth)acrylate, poly(meth)acrylate, polyethyl(meth)acrylate, polybutyl(meth)acrylate, polyisobutyl(meth)acrylate, polyesters, polyamides, polysiloxanes, polyimides, polyurethanes, polythiourethanes, polycarbonates, polyallylics, polysulfides, polyvinyls, polyarylenes, polyoxides, and polysulfones, and blends thereof.

9. The method of claims 1-8, further comprising during step /4/, melting, fusing, sintering, or bonding particles of the at least one thermoplastic.

10. The method of claims 1-9, wherein the Additive Manufacturing process is selected from the group consisting of: scanning laser sintering (SLS), scanning laser melting (SLM), fused deposition modeling (FDM), and ink-jet printing.

11. The method of claims 1-10, wherein step /4/ further comprises subjecting at least one voxel and at least one incremental intermediate element to at least one mechanical, physical or chemical treatment.

12. The method of claim 11, wherein the treatment further comprises thermal radiation, convective heating, conductive heating, cooling, chilling, infra-red, microwave, UV radiation, visible light radiation, , evaporation, or exposing the at least one voxel to a temperature which is below the temperature used at the constitution step of at least one of the voxels.

## Patentansprüche

1. Verfahren zur additiven Fertigung einer dreidimensionalen transparenten ophthalmischen Linse, wobei das Verfahren die folgenden Schritte umfasst:
/1/ Bilden eines ersten Voxels aus einer ersten Zusammensetzung, die wenigstens ein Polymer oder Präpolymer umfasst;
/2/ Bilden eines zweiten Voxels aus einer zweiten Zusammensetzung, die wenigstens ein Polymer oder Präpolymer umfasst;
/3/ Induzieren von Konnektivität zwischen dem gebildeten ersten und dem gebildeten zweiten Voxel, um ein inkrementelles Zwischenprodukt-Element (p) zu erzeugen;
/4/ Wiederholen der Schritte /2/ und /3/ mit nachfolgenden zusätzlichen Voxeln (n+1, n+2, ...N), um inkrementelle Zwischenprodukt-Elemente (p+1, p+2, ...P) zu erzeugen, um die dreidimensionale transparente ophthalmische Linse zu bilden;
wobei das wenigstens eine Polymer oder Präpolymer der zweiten Zusammensetzung einen Brechungsindex in dem Bereich von etwa 0,02 bis etwa 0,001 der ersten Zusammensetzung aufweist;
wobei wenigstens eines der Polymere oder Präpolymere wenigstens einen Thermoplast umfasst; und
wobei das Verfahren ferner während Schritt /3/ Schmelzen, Verschmelzen, Sintern oder Binden von Partikeln des wenigstens einen Thermoplasts umfasst.

2. Verfahren gemäß Anspruch 1, wobei die erste und die zweite Zusammensetzung verschieden sind.

3. Verfahren gemäß Anspruch 2, wobei die erste und die zweite Zusammensetzung verschiedene Polymere oder Präpolymere umfassen.

4. Verfahren gemäß Anspruch 2, wobei die erste und die zweite Zusammensetzung gleiche Polymere oder Präpolymere umfassen.

5. Verfahren gemäß Ansprüchen 1-4, wobei das wenigstens eine Polymer ausgewählt ist aus der Gruppe bestehend aus: Polyacrylen, Polyolen, Polyaminen, Polyamiden, Polyanhydriden, Polycarbonsäuren, Polyepoxiden, Polyisocyanaten, Polynorbornenen, Polysiloxanen, Polysilazanen, Polystyrolen, Polyolefinen, Polyestern, Polyimiden, Polyurethanen, Polythiourethanen, Polycarbonaten, Polyallylen, Polysulfiden, Polyvinylestern, Polyvinylethern, Polyarylenen, Polyoxiden, Polysulfonen, Polycycloolefinen, Polyacrylnitrilen, Polyethylenterephthalaten, Polyetherimiden und Polypentenen.

6. Verfahren gemäß Ansprüchen 1-5, wobei das Präpolymer ausgewählt ist aus der Gruppe bestehend aus: Polyacrylen, Polyolen, Polyaminen, Polyamiden, Polyanhydriden, Polycarbonsäuren, Polyepoxiden, Polyisocyanaten, Polynorbornenen, Polysiloxanen, Polysilazanen, Polystyrolen, Polyolefinen, Polyestern, Polyimiden, Polyurethanen, Polythiourethanen, Polycarbonaten, Polyallylen, Polysulfiden, Polyvinylestern, Polyvinylethern, Polyarylenen, Polyoxiden und Polysulfonen, Polycycloolefinen, Polyacrylnitrilen, Polyethylenterephthalaten, Polyetherimiden, Polypentenen.

7. Verfahren gemäß Anspruch 1, wobei der wenigstens eine Thermoplast ein festes Partikel, einschließlich Pulver, Perlen und Stäbchen, ist.

8. Verfahren gemäß Ansprüchen 1-7, wobei der wenigstens eine Thermoplast ausgewählt ist aus der Gruppe bestehend aus: Polyolefinen, wie z.B. Cycloolefinpolymeren, Polyacrylaten, wie z.B. Polymethyl(meth)acrylat, Poly(meth)acrylat, Polyethyl(meth)acrylat, Polybutyl(meth)acrylat, Polyisobutyl(meth)acrylat, Polyestern, Polyamiden, Polysiloxanen, Polyimiden, Polyurethanen, Polythiourethanen, Polycarbonaten, Polyallylen, Polysulfiden, Polyvinylen, Polyarylenen, Polyoxiden und Polysulfonen und Gemischen davon.

9. Verfahren gemäß Ansprüchen 1-8, ferner umfassend während Schritt /4/ Schmelzen, Verschmelzen, Sintern oder Binden von Partikeln des wenigstens einen Thermoplasts.

10. Verfahren gemäß Ansprüchen 1-9, wobei das additive Fertigungsverfahren ausgewählt ist aus der Gruppe bestehend aus: Scanning-Lasersintern (SLS), Scanning-Laserschmelzen (SLM), Fused Deposition Modeling (FDM) und Tintenstrahldrucken.

11. Verfahren gemäß Ansprüchen 1-10, wobei Schritt /4/ ferner Unterwerfen wenigstens eines Voxels und wenigstens eines inkrementellen Zwischenprodukt-Elements an wenigstens eine mechanische, physikalische oder chemische Behandlung umfasst.

12. Verfahren gemäß Anspruch 11, wobei die Behandlung ferner Wärmestrahlung, konvektives Heizen, konduktives Heizen, Kühlen, Abschrecken, Infrarot, Mikrowellen, UV-Strahlung, sichtbare Lichtstrahlung, Verdampfen oder Exponieren des wenigstens einen Voxels gegenüber einer Temperatur, die unter der Temperatur liegt, die bei dem Schritt des Bildens wenigstens einer der Voxel verwendet wird, umfasst.

## Revendications

1. Procédé de fabrication additive d'une lentille ophtalmique, transparente, tridimensionnelle, le procédé comprenant les étapes suivantes :
/1/ constitution d'un premier voxel d'une première composition comprenant au moins un polymère ou prépolymère ;
/2/ constitution d'un deuxième voxel d'une deuxième composition comprenant au moins un polymère ou prépolymère ;
/3/ induction d'une connectivité entre les premier et deuxième voxels constitués, de façon à créer un élément intermédiaire incrémentiel (p) ;
/4/ répétition des étapes /2/ et /3/ avec des voxels supplémentaires successifs (n+1, n+2,...N), de façon à créer des éléments intermédiaires incrémentiels (p+1, p+2, ...P), de façon à former la lentille ophtalmique, transparente, tridimensionnelle ;
dans lequel l'au moins un polymère ou prépolymère de la deuxième composition a un indice de réfraction dans la plage d'environ 0,02 à environ 0,001 de la première composition ;
dans lequel au moins un des polymères ou prépolymères comprend au moins un thermoplastique ; et
dans lequel le procédé comprend en outre, pendant l'étape /3/, la fonte, la fusion, le frittage ou la liaison des particules de l'au moins un thermoplastique.

2. Procédé selon la revendication 1, dans lequel les première et deuxième compositions sont différentes.

3. Procédé selon la revendication 2, dans lequel les première et deuxième compositions comprennent des polymères ou prépolymères différents.

4. Procédé selon la revendication 2, dans lequel les première et deuxième compositions comprennent des polymères ou prépolymères identiques.

5. Procédé selon les revendications 1 à 4, dans lequel l'au moins un polymère est choisi dans le groupe constitué de : polyacryliques, polyols, polyamines, polyamides, polyanhydrides, acides polycarboxyliques, polyépoxydes, polyisocyanates, polynorbornènes, polysiloxanes, polysilazanes, polystyrènes, polyoléfiniques, polyesters, polyimides, polyuréthanes, polythiouréthanes, polycarbonates, polyallyliques, polysulfures, poly(esters vinyliques), poly(éthers vinyliques), polyarylènes, polyoxydes, polysulfones, polycyclooléfines, polyacrylonitriles, poly(téréphtalates d'éthylène), polyétherimides et polypentènes.

6. Procédé selon les revendications 1 à 5, dans lequel le prépolymère est choisi dans le groupe constitué de : polyacryliques, polyols, polyamines, polyamides, polyanhydrides, acides polycarboxyliques, polyépoxydes, polyisocyanates, polynorbornènes, polysiloxanes, polysilazanes, polystyrènes, polyoléfiniques, polyesters, polyimides, polyuréthanes, polythiouréthanes, polycarbonates, polyallyliques, polysulfures, poly(esters vinyliques), poly(éthers vinyliques), polyarylènes, polyoxydes et polysulfones, polycyclooléfines, polyacrylonitriles, poly(téréphtalates d'éthylène), polyétherimides, polypentènes.

7. Procédé selon la revendication 1, dans lequel l'au moins un thermoplastique est une particule solide, comprenant une poudre, des billes et des bâtonnets.

8. Procédé selon les revendications 1 à 7, dans lequel l'au moins un thermoplastique est choisi dans les groupes constitués de : polyoléfines telles que des polymères de cyclooléfine, polyacrylates tels que le poly((méth)acrylate de méthyle), le poly(méth)acrylate, le poly((méth)acrylate d'éthyle), le poly((méth)acrylate de butyle), le poly((méth)acrylate d'isobutyle), polyesters, polyamides, polysiloxanes, polyimides, polyuréthanes, polythiouréthanes, polycarbonates, polyallyliques, polysulfures, polyvinyles, polyarylènes, polyoxydes et polysulfones, et des mélanges de ceux-ci.

9. Procédé selon les revendications 1 à 8, comprenant en outre, pendant l'étape /4/, la fonte, la fusion, le frittage ou la liaison des particules de l'au moins un thermoplastique.

10. Procédé selon les revendications 1 à 9, dans lequel le processus de fabrication additive est sélectionné dans le groupe constitué de : frittage au laser à balayage (SLS), fusion au laser à balayage (SLM), modelage par dépôt en fusion (FDM) et impression à jet d'encre.

11. Procédé selon les revendications 1 à 10, dans lequel l'étape /4/ comprend en outre la soumission d'au moins un voxel et d'au moins un élément intermédiaire incrémentiel à au moins un traitement mécanique, physique ou chimique.

12. Procédé selon la revendication 11, dans lequel le traitement comprend en outre une radiation thermique, un chauffage par convection, un chauffage par conduction, un refroidissement, une réfrigération, un rayonnement infrarouge, des micro-ondes, un rayonnement UV, un rayonnement de lumière visible, une évaporation ou l'exposition de l'au moins un voxel à une température qui est inférieure à une température utilisée dans l'étape de constitution d'au moins un des voxels.
